# EUROPEAN PATENT APPLICATION

(11) **EP 4 671 056 A1**
(43) Date of publication of application: **31.12.2025**
(21) Application number: 25180760.8
(22) Date of filing: 04.06.2025
(51) Int. Cl.: B60R 25/00, B63B 17/00

(54) **SYSTEMS AND METHODS FOR PROVIDING AUTHENTICATION FOR OPERATING FUNCTIONS OF MARINE VESSELS**

(30) Priority: 05.06.2024 US 202418734665; 30.09.2024 US 202418902297
(71) Applicant: BRUNSWICK CORPORATION, Mettawa, IL 60045 (US)
(72) Inventor: Caruana, Christopher R., Neenah, WI 54956 (US); Snyder, Matthew W., Fond du Lac, WI 54937 (US); Taylor, Brad E., Stillwater, OK 74074 (US); Baer, Mitchell J., Fond du Lac, WI 54937 (US); Huinker, BJ, Waukesha, WI 53186 (US)
(74) Representative: Sandersons

(57) **Abstract**

A low energy system for providing authentication for operating a marine. An authentication device receives a key input and outputs a signal when matching a predetermined criteria. The authentication device has sleep and wake states, consumes less power in the sleep state than the wake state, and is inoperable to output the signal in the sleep state. A switch is operably coupled to the authentication device and operable to wake the authentication device from the sleep state to the wake state thereof. The switch is operably coupled such that at least one device of the marine vessel is configured to receive the power from the power source without the power passing through the switch. The authentication device being in the sleep state before being woken by the switch conserves the power from the power source.

## Description

### FIELD

The present disclosure relates to marine vessels, and particularly to systems and methods for providing authentication for operating functions of marine vessels.

### BACKGROUND

U.S. Patent No. 11,347,223 discloses a marine propulsion system for a marine vessel having a first marine propulsion device rotatable with respect to the marine vessel about at least one of a first steering axis and a first tilt-trim axis and a second marine propulsion device rotatable with respect to the marine vessel about at least one of a second steering axis and a second tilt-trim axis. A first control module controls operation of the first marine propulsion device, and a second control module controls operation of the second marine propulsion device. In response to one of the first and second marine propulsion devices being commanded to rotate about at least one of its respective first or second steering axis and its respective first or second tilt-trim axis, the respective first or second control module of the other of the first and second marine propulsion devices is turned ON.

U.S. Patent No. 10.797,907 discloses a controller associated with a propulsion device in a marine propulsion system, which is configured to send and receive controller area network (CAN) messages on a CAN bus and has computer-executable instructions stored thereon executed by a processor of the controller to perform a method. The method includes receiving a configuration instruction CAN message containing a new configuration value, determining that the configuration instruction CAN message is directed to itself, and then receiving a reboot CAN message. Upon determining that the reboot CAN messages directed to itself, the controller writes the new configuration value to memory and then controls a power relay to power off the controller, ignoring a key switch value associated with the propulsion device being on. The controller then responds to the key switch value to power the controller back on, and then loads the new configuration value into the working memory of the controller.

### SUMMARY

This Summary is provided to introduce a selection of concepts that are further described herein below in the Detailed Description. This Summary is not intended to identify key or essential features of the claimed subject matter, nor is it intended to be used as an aid in limiting the scope of the claimed subject matter.

One aspect of the present disclosure generally relates to a (e.g. low energy) system for providing authentication for operating a marine vessel having a power source. An authentication device is configured to receive a key input and to output a signal when the key input matches a predetermined criteria to thereby provide the authentication for operating at least one function of the marine vessel. The authentication device has a sleep state and a wake state, where the authentication device consumes less power in the sleep state than in the wake state and is inoperable to output the signal when in the sleep state. A switch is operably coupled to the authentication device and operable to wake the authentication device from the sleep state to the wake state thereof. The switch is operably coupled such that at least one device of the marine vessel is configured to receive the power from the power source without the power passing through the switch. The authentication device being in the sleep state before being woken by the switch conserves the power from the power source. It should be recognized that embodiments that include an authentication device described as having a sleep state, along with a mechanism (e.g., a switch) operable to wake the authentication device also have corresponding alternative embodiments in which the authentication device does not have a sleep state and/or in which a switch is not provided for waking the authentication device.

In certain examples, a controller is operatively coupled with the switch and configured such that the switch ceases waking the authentication device after a predetermined time since being woken. In further examples, after being woken from the sleep state to the wake state the authentication device returns to the sleep state unless the key input is received and determined to match the predetermined criteria within a predetermined time after being woken.

In certain examples, the switch is operable to wake the authentication device by selectively providing 12 VDC thereto.

In certain examples, the authentication device consumes less than 0.25 Watts of power when in the sleep state.

In certain examples, the switch and the authentication device are coupled to the marine vessel via a shared housing.

In certain examples, the marine vessel comprises a marine drive, and wherein the switch is further operably coupled to control at least one of powering and cranking the marine drive when the authentication device has provided the authentication for operating the marine vessel.

In certain examples, the authentication device is a first authentication device, the key input is a first key input, the predetermined criteria is a first predetermined criteria, and the signal is a first signal, further comprising a second authentication device configured to receive a second key input and to output a second signal when the second key input matches a second predetermined criteria to thereby provide the authentication for operating the marine vessel, wherein the second authentication device has a sleep state and a wake state, wherein the second authentication device consumes less power from the power source when in the sleep state than when in the wake state and is inoperable to output the second signal when in the sleep state, and wherein the first authentication device and the second authentication device are operatively coupled such that waking the first authentication device causes the second authentication device to wake.

In further examples, the first predetermined criteria is the same as the second predetermined criteria. In further examples, the first authentication device causes the second authentication device to wake via a CAN network.

In certain examples, the authentication device is configured to receive the key input wirelessly.

In certain examples, the marine vessel comprises a powered device configured to receive the power from the power source, and wherein the powered device is prevented from receiving the power from the power source until the authentication device has provided the authentication for operating the marine vessel. In further examples, the powered device is other than a marine drive operable to generate propulsion for the marine vessel.

In certain examples, the marine vessel comprises a first powered device and a second powered device each configured to receive the power from the power source, and wherein the first powered device is prevented from receiving the power from the power source until the authentication device has been woken and the second powered device is prevented from receiving the power from the power source until the authentication device has provided the authentication for operating the marine vessel.

In further examples, the second powered device is a marine drive, and wherein the first powered device is a user device, and wherein providing the power to the first powered device before the second powered device allows the first powered device to begin starting up earlier.

In certain examples, the power from the power source to the first powered device is subsequently stopped unless the key input is received and determined to match the predetermined criteria within a predetermined time after the authentication device is woken.

In certain examples, the marine vessel comprises a powered device configured to be powered by the power source, wherein the switch is inoperable to stop the powered device from operating after operation of the marine vessel has been authenticated.

In certain examples, the marine vessel comprises a powered device configured to be powered by the power source and operable only after the authentication device has outputted the signal indicating authentication, wherein the powered device has a sleep state and a wake state and uses less power in the sleep state than in the wake state, and wherein the authentication device outputting the signal causes the powered device to wake from the sleep state to the wake state.

In further examples, in the sleep state the powered device consumes less than 0.25 Watts of power.

Another aspect according to the present disclosure generally relates to a method of providing authentication for operating a marine vessel having a power source. The method includes receiving a request via a switch to wake an authentication device from a sleep state to a wake state thereof, wherein the switch is operably coupled such that at least one device of the marine vessel is configured to receive power from the power source without the power passing through the switch. The method further includes waking the authentication device from a sleep state to a wake state when the request is received, wherein the authentication device is configured to receive a key input and to output a second signal when the key input matches a predetermined criteria to thereby provide the authentication for operating at least one function of the marine vessel, wherein the authentication device consumes less of the power in the sleep state than in the wake state and is inoperable to output the second signal when in the sleep state. The authentication device being in the sleep state before the request to wake is received conserves the power from the power source.

In certain examples, the request is provided for a predetermined time after actuating the switch and subsequently ended, and wherein the authentication device is caused to return to the sleep state after the predetermined time unless the key input is received and determined to match the predetermined criteria before the predetermined time has lapsed.

In certain examples, the switch is a first switch and the method further includes operating a first function of a first powered device and a second function of a second powered device simultaneously when receiving a request from a second switch as the at least one function of the marine vessel having authentication, operating the first function of the first powered device without operating the second function of the second powered device when receiving a request from a third switch as the at least one function of the marine vessel having authentication, and operating the second function of the second powered device without operating the first function of the first powered device when receiving a request from a fourth switch as the at least one function of the marine vessel having authentication.

Another aspect of the present disclosure generally relates to a method of providing authentication for a marine vessel. The method includes receiving via an authentication device a key input and outputting a signal when the key input matches a predetermined criteria to thereby provide the authentication for operating at least one function of the marine vessel. The method further includes operating a first function of a first powered device and a second function of a second powered device simultaneously when receiving a request from a first switch as the at least one function of the marine vessel having authentication, operating the first function of the first powered device without operating the second function of the second powered device when receiving a request from a second switch as the at least one function of the marine vessel having authentication, and operating the second function of the second powered device without operating the first function of the first powered device when receiving a request from a third switch as the at least one function of the marine vessel having authentication.

Another aspect of the present disclosure generally relates to a system for operating at least a first powered device and a second powered device of a marine vessel (with additional powered devices also being contemplated, including 3, 4, 5, 6, or more powered devices, which by way of example may be marine drives). The system includes a first switch, a second switch, and a third switch. A controller is operatively coupled to the first switch, the second switch and the third switch. The controller is configured to operate a first function of the first powered device and a second function of the second powered device simultaneously when receiving a request from the first switch, operating the first function of the first powered device without operating the second function of the second powered device when receiving a request from the second switch, and operating the second function of the second powered device without operating the first function of the first powered device when receiving a request from the third switch.

In certain embodiments, the system further includes an authentication device configured to receive a key input and to output a signal when the key input matches a predetermined criteria to thereby provide the authentication to allow operation of the first device and/or the second device of the marine vessel. In further embodiments, the authentication device has a sleep state and a wake state, where the authentication device consumes less power in the sleep state than in the wake state and is inoperable to output the signal when in the sleep state. A fourth switch is operably coupled to the authentication device and operable to wake the authentication device from the sleep state to the wake state thereof. The authentication device being in the sleep state before being woken by the switch conserves the power.

Another aspect of the present disclosure generally relates to a (e.g. low energy) system for waking a powered device of a marine vessel from a sleep state to a wake state. The system includes a communication network configured for communicating a signal for waking the powered device and a controller electrically coupled to the powered device, the controller having a sleep state and a wake state. The controller is configured to receive the signal within the communication network, and the controller is configured to wake from the sleep state thereof and to wake the powered device from the sleep state thereof when the signal is received. The controller being in the sleep state thereof before the signal is received conserves power for the marine vessel.

In certain examples, the communication network includes a CAN bus.

In certain examples, the powered device includes a marine drive operable to generate propulsion for the marine vessel.

In certain examples, the controller is a first controller, wherein the marine vessel further comprises a second controller configured to wirelessly communicate with a wireless key, to determine whether the wireless key meets predetermined criteria, and to generate the signal when the wireless key meets the predetermined criteria, wherein the signal generated when the wireless key meets the predetermined criteria causes the powered device to wake from the sleep state thereof.

In further examples, the powered device includes a marine drive.

In further examples, the powered device is a first powered device, and the second controller is configured to wake a second powered device from a sleep state thereof.

In further examples, the second controller is configured to be woken from a sleep state to a wake state thereof via actuation of a button, wherein the second controller is configured to wirelessly communicate with the wireless key when in the wake state of the second controller, and wherein the second controller being in the sleep state conserves power for the marine vessel.

In further examples, the second controller is configured to be woken via the button without communicating through the communication network.

In certain examples, the controller is configured to consume less than 0.1 Watt in the sleep state thereof.

In certain examples, the controller is a first controller and the powered device is a first powered device, further comprising a second controller electrically coupled to a second powered device of the marine vessel, the second controller having a sleep state and a wake state, wherein the second controller is configured to receive the signal within the communication network, and wherein the controller is configured to wake from the sleep state thereof and to wake the second powered device from the sleep state thereof when the signal is received, wherein the second controller being in the sleep state thereof before the signal is received conserves power for the marine vessel.

In certain examples, the controller is a first controller and the powered device is a first powered device, further comprising a second controller electrically coupled to a second powered device of the marine vessel, the second controller having a sleep state and a wake state, wherein the second controller is configured to generate the signal when waking the second powered device such that the first powered device is also woken.

In further examples, the second controller is configured to detect a wireless key, to determine whether the wireless key meets predetermined criteria, and to generate the signal when the wireless key meets the predetermined criteria.

In certain examples, the controller is a first controller and the powered device is a first powered device, further comprising a second controller electrically coupled to a second powered device of the marine vessel, the second controller having a sleep state and a wake state, and further comprising a button operable to wake the second controller, wherein the second controller is configured to generate the signal when the button is actuated such that both the first powered device and the second powered device are woken thereby.

In certain examples, the signal is provided as 12 VDC.

In certain examples, the powered device is one of a plurality of powered devices, and wherein the signal being communicated via the communication network causes all of the plurality of powered devices to be woken from the sleep states thereof.

In certain examples, the controller is configured to be woken via each of receiving the signal via CAN bus, receiving the signal as 12 VDC, and a button electrically coupled to the controller other than through the communication network.

In further examples, the powered device is one of a plurality of powered devices and the controller is one of a plurality of controllers configured to wake the plurality of powered devices, each of the plurality of controllers being configured to be woken from a sleep state thereof via each of actuation of a button electrically coupled thereto other than through the communication network, receiving the signal via CAN bus, and receiving the signal as 12 VDC.

Another aspect of the present disclosure generally relates to a method for conserving power managing a powered device on a marine vessel, the powered device having a sleep state and a wake state. The method includes receiving via a controller a signal for waking the powered device from the sleep state thereof, wherein the signal is received via a communication network. The method further includes waking the controller from a sleep state thereof when the signal is received, and waking the powered device via the controller when the controller is woken, wherein the controller being in the sleep state thereof before the signal is received conserves power for the marine vessel.

In certain examples, the controller is a first controller, further comprises via a second controller wirelessly communicating with a wireless key, determining whether the wireless key meets predetermined criteria, and generating the signal when the wireless key meets the predetermined criteria to thereby cause the powered device to wake.

In certain examples, the powered device is one of a plurality of powered devices and the controller is one of a plurality of controllers configured to wake the plurality of powered devices, wherein receiving the signal causes the plurality of controllers to wake the plurality of powered devices together.

It should be recognized that the different features described throughout this disclosure may be combined in different manners, including in manners other than those expressly disclosed in the provided examples, while still constituting an embodiment of the invention accord to the present disclosure.

Various other features, objects and advantages of the disclosure will be made apparent from the following description taken together with the drawings.

### BRIEF DESCRIPTION OF THE DRAWINGS

The present disclosure is described with reference to the following Figures. The same numbers are used throughout the Figures to reference like features and like components.
FIG. 1 is a top view of a marine vessel incorporating a system for controlling powered devices according to the present disclosure.
FIG. 2 is a schematic view of a system using physical keys for controlling powered devices.
FIG. 3 is a schematic view of a system using wireless keys for controlling powered devices.
FIG. 4 is a schematic view of one embodiment of a system for waking powered devices according to the present disclosure.
FIG. 5 is a schematic view of another embodiment of a system for waking powered devices according to the present disclosure.
FIG. 6 is a schematic view depicting controllers for waking powered devices similar to those presently known in the art.
FIG. 7 is a schematic view depicting embodiments of controllers for waking powered devices according to the present disclosure, such as may be used within the system of FIG. 4.
FIG. 8 is a schematic view of a control system for a system such as shown in FIG. 4.
FIG. 9 is a flow chart depicting one method for conserving power managing powered devices of a marine vessel according to the present disclosure.
FIG. 10 is a schematic view of a system for providing authentication for operating a marine vessel according to the present disclosure.
FIG. 11 is a flow chart depicting a method for providing authentication for operating a marine vessel according to the present disclosure

### DETAILED DESCRIPTION

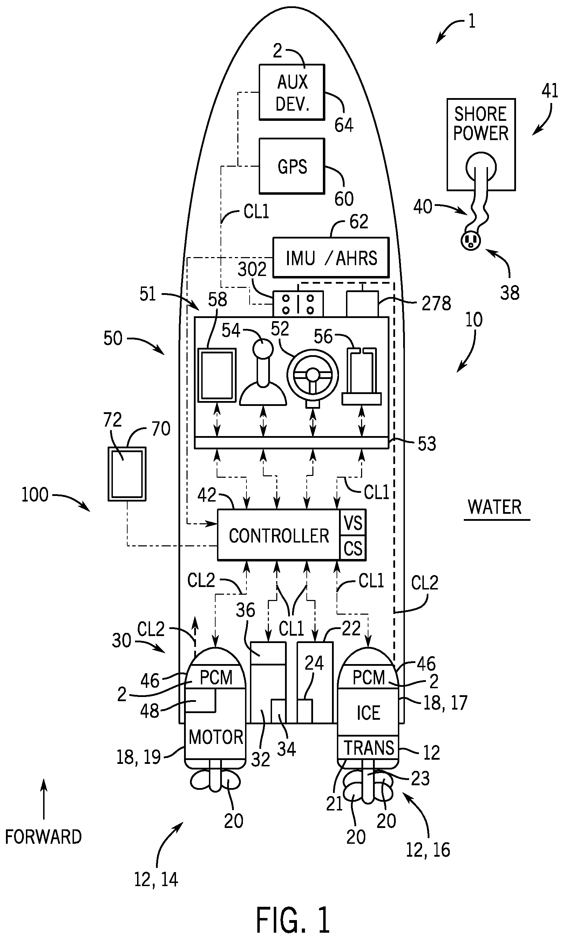

FIG. 1 depicts an example of a system 10 for controlling powered devices 2 of a marine vessel 1 according to the present disclosure. The marine vessel 1 is configured to move within a body of water in a direction instructed by an operator via a steering control system, or by a guidance system configured to automatically control steering of the marine vessel to steer the vessel toward a predetermined location or global position. The marine vessel 1 may be steered in a conventional manner, such as by controlling a marine drive or a rudder via a steering actuator. Additional information regarding exemplary steering actuators is provided in U.S. Patent Nos. 7,150,664; 7,255,616; and 7,467,595.

The system 10 of FIG. 1 includes two marine drives 12 each configured to propel the marine vessel 1 through the water. For demonstration purposes, the present marine vessel 1 is shown to have two different marine devices 12, specifically an electric marine drive 14 and a gasoline powered marine drive 16 (e.g., steerable by conventional steering actuators). While the marine drives 12 are shown as outboard motors, these could instead be inboard motors, stern drives, pod drives, and/or jet drives. Each marine drive 12 includes a powerhead 18. The powerheads 18 may be internal combustion engines (ICE) 17 (e.g., gasoline or diesel engines, gasoline for the gasoline powered marine drive 16), electric motors 19 (e.g., for the electric marine drive 14), and/or a hybrid thereof. In certain examples, one of the marine drives may have a greater thrust capability than the other (e.g., the first marine drive being equivalent to 3 HP and the second marine drive being equivalent to 400 HP); however, this is not a limitation of the presently disclosed systems and methods.

Examples of powerheads 18 for electric marine drives include, for example, a brushless DC motor, a DC brushed motor, an AC brushless motor, a direct drive, a permanent magnet synchronous motor, an induction motor, or any other device that converts electric power to rotational motion. In certain embodiments, the powerheads 18 include a rotor and a stator in a known configuration. Each electric motor 19 may be associated with its own motor controller MC configured to control power to the electric motor, such as to the stator winding thereof. The motor controller MC is configured to control the function and output of the electric motor 19, such as controlling the torque outputted by the motor, the rotational speed of the electric motor 19, as well as the input current, voltage, and power supplied to and utilized by the electric motor 19. In one arrangement, the motor controller MC controls the current delivered to the stator windings via leads connected to the electric motor 19, which input electrical energy to the electric motor to induce and control rotation of the rotor.

Each powerhead 18 is operatively connected in a torque-transmitting relationship that rotates a propeller 20 to generate thrust in the water. As will be known to one of ordinary skill in the art, the propeller 20 may include one or more propellers, impellers, or other propulsor devices and that the term "propeller" may be used to refer to all such devices. In certain embodiments, torque is transmitted from the powerhead 18 of a marine drive 12 to the corresponding propeller 20 via a transmission 21, such as a multi-speed transmission providing two or more gears for propelling the marine vessel in the forward direction. In the embodiment of FIG. 1, torque for the gasoline powered marine drive 16 is transmitted from the powerhead 18 to a pair of propellers 20 via a counter-rotating propeller shaft assembly 23 in a manner known in the art. The marine drives 12 are configured to generate thrust to move the marine vessel only in the forward and aft directions in a conventional manner.

The marine drives 12 are connected so as to receive energy from one or more energy sources. In the case of a gasoline powered marine drive 16, the energy is gasoline and the energy source is a fuel tank 22 fluidly connected to the ICE 17 in a conventional manner. A fuel level sensor 24 is configured to measure the amount of fuel remaining in the fuel tank 22 in a conventional manner (e.g., a Hall effect sensor that measures a position of a float within the fuel tank 22).

In the case of an electric marine drive 14, the energy is electrical power, and the energy source is electrical power within a power system 30. The power system 30 stores electrical energy for powering the electric motor 19 and/or other electrical devices associated with the marine vessel, such as HVAC systems, water pumps, and the like. Various power storage devices and systems are known in the relevant art. The power system 30 may include a battery system with one or more batteries or banks of batteries 32, which may include one or more lithium-ion (LI) battery systems, each battery comprised of multiple battery cells. In other embodiments, the power system 30 may include one or more lead-acid batteries, fuel cells, flow batteries, ultracapacitors, and/or other devices capable of storing and outputting electric energy.

The power system 30 further includes a battery management system (BMS) 34 configured to monitor and/or control aspects of the power system 30. The BMS 34 may further be configured to receive information from current, voltage, and/or other sensors within the power system 30, such as to receive information about the voltage, current, and temperature of each battery cell or group of battery cells within the power system 30. For example, the BMS 34 may receive inputs from one or more sensors within the power system 30, such as one or more voltage, current, and temperature sensors within a housing for the power system 30. As described above, voltage sensors VS may be configured to sense voltage within the battery (such as cell voltage sensors configured to sense the voltage of individual cells or groups of cells in a LI battery) and one or more temperature sensors may be configured to sense a temperature within a housing of the power system 30 where one or more batteries or other storage elements are located. The BMS 34 or other controller in the system is configured to calculate a charge level, such as a state of charge, a voltage, whether any of the batteries are being charged, or other electrical measures of the power system 30.

While FIG. 1 shows the marine vessel 1 having a single BMS 34, it should be recognized that other configurations are also contemplated, including systems with no BMSs, a separate BMS for each battery cells, each battery, and/or each battery bank, or configurations in which one or more BMSs are shared across battery cells, batteries, and/or each battery banks.

The batteries within the battery banks 32 are configured to be charged via one or more chargers 36 that receive power from an external power connection 38 that is electrically coupled to the marine vessel 1. The external power connection 38 may vary in form but is generally configured for being electrically coupled to an external power source such as a shore power station 41, for example via a cable 40 having conventional flat blade electrical prongs. While the present disclosure generally refers to the external power connection as being a conventional source of shore power, this could also or alternatively be solar panels, wind vanes, water wheels, and/or other sources of power.

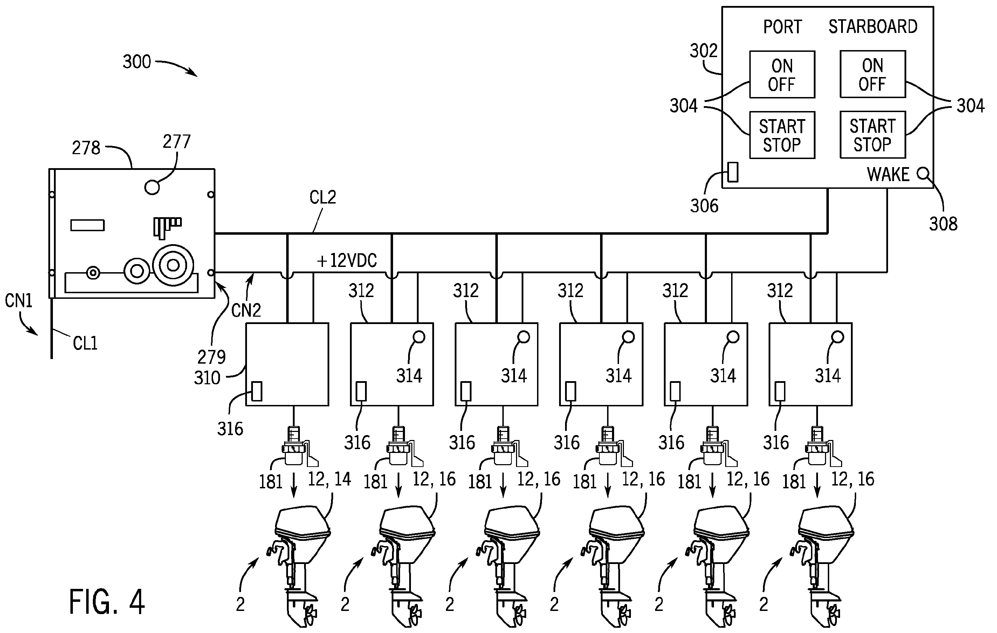

With continued reference to FIG. 1, the marine vessel 1 includes a control system 100 that performs functions of the system 10 and other systems and devices of the marine vessel. The control system 100 may include a plurality of control devices described herein. For example, the control system 100 includes a central controller 42, the one or more battery controllers or battery management systems BMS 34, a propulsion control module (PCM) 46, and one or more motor controllers MC, trim controllers, steering controllers, etc. Other controllers are also contemplated, such as a charging controller within the charger 36. The different controllers 34, 42, 46, and MC and may be communicatively connected via first communication links CL1 within a first communication network CN1, which may be as a communication bus such as a CAN bus or a LIN bus, or by single dedicated communication links between components. The first communication links CL1 may be configured in a conventionally manner, this is distinct from a second communication network CN2 that has been developed by the present inventors to provide new functionality and overcome limitations of using conventional communication networks alone, which is discussed further below. Additional controllers within the control system 100 (e.g., 310, 312 in FIG. 4) communicate via this second communication network CN2, which is also discussed further below.

A person of ordinary skill in the art will understand in view of the present disclosure that other control arrangements could be implemented and are within the scope of the present disclosure, and that the control functions described herein may be combined into a single controller or divided into any number of a plurality of distributed controllers that are communicatively connected. In certain embodiments, one or more of the controller 34, 42, and 46 are positioned within a marine drive (e.g., an electric marine drive).

In certain embodiments, various sensing devices such as those described above for measuring voltage, current, state of charge, and the like may be configured to communicate with a local controller, such as the motor controller MC, a propulsion control module PCM 46, or BMS 34. In other embodiments, the various sensing devices may communicate with the central controller 42, which may permit eliminating one or more local controllers. In the example of FIG. 1, the controller 42 communicates with the BMS 34 to receive voltages, currents, state of charge, and other measurements therefrom, as well as to control the operation of the corresponding battery. In the embodiment of FIG. 1, a voltage sensor VS and a current sensor CS are provided within the system 10 and in communication with the controller 42 to provide measurements of the current voltage within the system 10 (e.g., the voltage potential available for powering the load), and the current flowing to the load, respectively. Other sensors may also be provided in communication with the controller 42 in a conventional manner.

With continued reference to FIG. 1, additional components are also provided in communication with the control system 100, each of which may function as an input thereto and/or output thereof. In the example shown, the controller 42 also receives input from and/or communicates with one or more user interface devices within a user interface system 50 at the helm 51 of the marine vessel 1 via the communication links CL. Communication between the user interface system 50 at the helm 51 and the controller 42 may be provided via the same communication link as utilized for communication between the controllers 34, 46, MC, or may be a separate communication link. The user interface devices 50 in the exemplary embodiment include a steering wheel 52, a joystick 54, throttle levers 56, and a display device 58.

The steering wheel 52 and joystick 54 may be configured to receive user inputs in a conventional manner, which subsequently may communicate with the controller 42 to effectuate steering control over the marine vessel 1, such as by steering one or more marine drives 12, which is well-known and typically referred to as steer-by-wire arrangements. Other steer arrangements, such as steering cable systems arrangements, are well-known in the art and could alternatively be implemented.

Likewise, the throttle levers 56 may be configured to receive user inputs in a conventional manner, including both a magnitude and a direction for generating thrust (e.g., to propel the boat in the forward direction or in the reverse direction.

The display device 58 is configured to display information for the user, as well as to receive input commands relating to steering, thrust, and/or other functions of the marine vessel and/or marine drive. This includes the programming of destinations and waypoints for autopiloting. In particular, the display device 58 may be a multi-functional display device permitting touch-screen inputs from the user. It should be recognized that other input devices may also be provided, such as keyboards, trackpads, roller balls, and the like. In various embodiments, the display device 58 may be, for example, part of an onboard management system, such as the VesselView^{™} by Mercury Marine of Fond du Lac, Wisconsin.

The onboard management system may also or alternatively be controlled through an external device 70 that wirelessly communicates with the controller 42, such as a tablet or smartphone communicating via wireless protocols known in the art (e.g., Wi-Fi or Bluetooth^{®}). The external device 70 may have a processor, storage device, and an input/output (I/O) system in the same manner as other controllers discussed above. The processor may be configured to execute an application stored in the storage device that enables the user to receive information from the controller 42 relating to the marine drives 12 and the marine vessel 1 more generally, to input a destination for propelling the marine vessel, and to provide input commands to the controller 42 for controlling the marine drives 12 and the marine vessel 1 more generally. By way of example, the external device 70 may be configured to operate an application such as the "Mercury Marine" App or the VesselView ^{™} Mobile App each provided by Mercury Marine of Fond du Lac, Wisconsin. In each case, the applications allow the user to receive information and to provide input commands via a user interface 72 of the external device 70, such as via a touchscreen. In this manner, the external device 70 may also constitute a controller within the control system 100.

Other components may also communicate with the controller 42, such as a GPS system 60 configured to determine a current global position of the vessel, track vessel position over time, and/or determine vessel speed and direction of travel and to provide this information to the controller 42. Alternatively, or additionally, vessel speed may be measured by a speed-over-water sensor such as a pitot tube or a paddle wheel and such information may be provided to the controller 42. This communication may again be provided via CAN bus, LIN bus, or single dedicated communication links, such as within the first communication network CN1.

The marine vessel 1 may also include an inertial measurement unit (IMU) or an attitude and heading reference system (AHRS) (collectively shown as the IMU/AHRS 62). An IMU has a solid state, rate gyro electronic compass that indicates the vessel heading and solid-state accelerometers and angular rate sensors that sense the vessel's attitude and rate of turn. An AHRS provides 3D orientation of the marine vessel 1 by integrating gyroscopic measurements, accelerometer data, and magnetometer data. The IMU/AHRS 62 could be GPS-enabled, in which case a separate GPS system 60 would not be required. The IMU/AHRS 62 may communicate with the controller 42 in a similar manner to the GPS system 60.

In addition to the electric marine drive 14, the GPS 60, the IMU/AHRS 62, and other powered devices 2 are also powered by the power system 30. In particular, the system 10 may further be configured to power auxiliary devices 64 on the marine vessel 1 such as a bilge pump, a cabin light, a stereo system or other entertainment devices on the vessel, a water heater, a refrigerator, an air conditioner or other climate/comfort control devices on the vessel, communication systems, navigation systems, or the like. These devices may be powered from batteries (which are in turn powered by a charger), or directly powered by an external power source.

As boaters demand more power on their boats, there has been a tendency to install more and/or larger marine drives on a single marine vessel. This is especially easy to do with an outboard motor, which does not require changes to the vessel's hull to install. As more and larger marine drives are mounted on a single marine vessel's transom, the likelihood that they might interfere with one another while moving increases. The likelihood of interference (collision) increases when one or more of the marine drives is not turned ON. If all marine drives on the transom are turned ON and are manually controlled, they are generally all steered together. Although tilt/trim can be individually controlled, simultaneous steering is likely to prevent any collision. If all marine drives on the transom are turned ON and are automatically controlled, the automatic control algorithm is generally calibrated to prevent collision between the marine drives. However, if fewer than all of the marine drives are steered and/or tilted/trimmed (whether they are ON or not), the likelihood that those steered and/or tilted/trimmed marine drives will collide with a stationary marine drive that is OFF increases, as the OFF marine drive is not being steered simultaneously. Therefore, systems have been developed such that when one marine drive is ON or awake, the other marine drives are also woken up to enable communication regarding steering angles and trim angles to avoid the collisions discussed above.

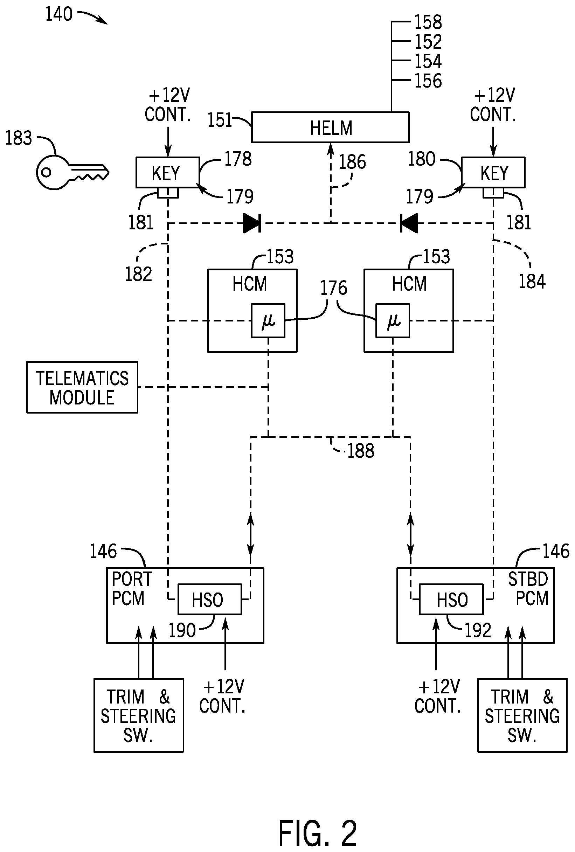

FIG. 2 shows one example of a system for authenticating control of powered devices similar to that disclosed in U.S. Patent No. 11,347,223, here using physical keys. The system also provides for a function referred to as "Global Wake," whereby when one powered device (e.g., a marine drive) is woken up, others are also awoken for the purpose of communicating information to avoid collisions such as those discussed above.

In the example system 140 shown, two helm control modules (HCM) 153 are provided, one associated with each marine drive's PCMs 146. Each HCM 153 includes a microprocessor 176 in signal communication with conventional key inputs 178, 180 by way of respective lines 182, 184. The key inputs 178, 180 may be connected via a conventional 6-pin ignition switch connector 181, for example such as model 87-17009A2 or 87-17009A5 produced by Mercury Marine ^{®} of Fond du Lac, WI. The key inputs 178, 180 are initiated by the operator of the marine vessel by, for example, inserting a key 183 into a slot 179 of the key input 178, 180 and turning the key within the slot 179 to an ON position. The key input 178, 180 acts as a key switch having opened and closed positions that are selected by rotating the corresponding key within the slot 179. Operation of the powered devices controlled by these key switches is automatically considered to be permitted or authenticated since the operator necessarily has the unique key required to use the key switch.

The respective marine drives can be started by turning the respective keys to START positions, or by selecting respective START/STOP buttons or display screen options. It should be understood that each key input 178, 180 is individually associated with a respective PCM 146. For instance, key input 178 being turned ON will turn on (or "wake up") one PCM 146 (e.g., for the port side marine drive), while key input 180 being turned ON will turn on the PCM 146 of another marine drive (e.g., the starboard side marine drive 12). The signals along lines 182 and 184 are interpreted by the respective PCMs 146 as commands to turn their power ON and to provide normal steering, trim, diagnostic, and other functionality to the marine drives.

When the key input is received from either 178 or 180, a signal is sent over line 186 to the helm 151 and to each of the controls located there. Thus, the display device 158, steering wheel 152, joystick 154, throttle levers 156, and the PCMs 146 of other marine drives are all woken up (provided with electrical power) in order that they may be used to input control signals. When the signal along line 182 is asserted, then the PCM 146 will assert a signal to wake other modules (176 and 146) for communication purposes. This is shown by the signal over line 188. The signal over line 188 is interpreted by the PCMs 146 as a command to power ON, but, in one example, to provide communication only of specific parameters and control only of specific outputs, rather than to provide full functionality as if the PCM 146 had been keyed ON via line 182 or 184.

In the present example, each PCM 146 has a high side output (HSO) 190, 192 capable of sending a +12 V signal over line 188 to wake the other PCM 146 from their otherwise low power state (which may include being off entirely, e.g., 0 Watts, less than 0.25 Watt, or other low power values). The connection between the HSOs 190, 192 and the line 188 can be made internally to the respective PCM 46 or in the respective marine drive's wiring harness. In the present example, the PCM 146 that is keyed ON asserts the +12 V output signal from HSO 190 or 192 over line 188 in response to receiving the respective input signal over line 182 or 184. Such an input/output causal chain can be accomplished by way of the microprocessors 176, which are in signal communication with one another, or by way of an OR-gate diode circuit connecting the line 182 to the HSO 192 and the line 184 to the HSO 190.

Alternatively, in response to one of the marine drives being commanded to rotate about its respective steering axis and/or its respective trim axis, the respective PCM 146 of the other of the marine drives is turned ON. Note that when the PCMs 146 are turned on, the corresponding powerheads are not necessarily started, unless they have otherwise been commanded to start (e.g., via rotation of its respective key 183 within the slot 179 of the corresponding key input 178, 180).

The present inventors have recognized that this system 140 would drain the onboard battery within days or even hours, whereby the PCMs 146 and HCMs 153 are always consuming power. As such, the present inventors have identified that having different marine drives or other powered devices operating above a lower power state while there isn't an external power source is not feasible (e.g., shore power or an internal combustion engine running).

Additionally, the present inventors have recognized an increased demand for wireless keys rather than physical keys, for example with the operator using a key fob or smartphone operating an application for the purposes of providing authentication to operate the system and the powered devices therein (e.g., marine drives and accessories such as a stereo system). However, the incorporation of wireless keys further complicates the systems and methods for controlling these powered devices and providing authentication, which increases costs, the time for installation, and the number of potential sources of failure. Moreover, these wireless systems further exacerbate the problems of power consumption for the system of authenticating and controlling the powered devices since the wireless communication adds further power demand.

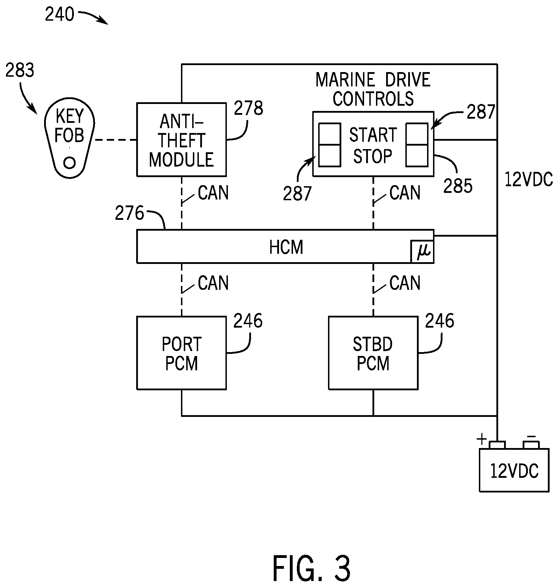

In particular, as shown in FIG. 3, these systems 240 have wireless authentication devices (e.g., anti-theft modules 278) that monitor for the presence of these physical of wireless keys 283 such as key fobs, request and retrieve credentials from the wireless key 283, and determine whether the wireless key 283 matches a predetermined criteria for authenticating that wireless key 283 for approval to actuate the key switch within the anti-theft module 278. The anti-theft module 278 may use near-field communication (NFC), Bluetooth ^{®}, Wi-Fi, or other standards and protocols for communication and has a processor, memory system, I/O system, etc. The predetermined criteria may be a particular string of characters from an RFID chip, a MAC address, or other techniques known in the art for digitally authenticating wireless keys. One example of a commercially available anti-theft module 278 is the 1st Mate Hub produced by Fell Marine Inc. of Delray Beach, FL for use with SmartCraft Engines produced by Mercury Marine ^{®} of Fond du Lac, WI, which is configured to read and authenticate a 1^{st} Mate Captain FOB (also by Fell Marine for Mercury Marine) as the wireless key 283, which is a wearable device intended to be worn on the wrist or lifejacket of the captain to also act as a wireless lanyard to stop marine drives if the captain falls overboard.

If the wireless key 283 is determined to meet this predetermined criteria, for example the wireless key providing a string that matches a string saved in memory within the anti-theft module, the anti-theft module 278 outputs a CAN signal indicating that the predetermined criteria has been confirmed to be met. Other devices, such as PCMs 246, then receive this signal over CAN and are enabled to operate once the wireless key has been authenticated; however, they can only do this once they are out of lower power mode.

The wireless key 283 may also include a start button for providing CAN-based instructions to start a marine drive or another powered device. In certain examples, a separate start module 285 is provided within the system 240, which includes switches 287 for selectively sending CAN-based or hardwired 12 V signals to start or stop operation of marine drives or other powered accessories. The switches 287 may be positioned at the helm or another convenient location, for example replacing physical keys as the switches customarily positioned at the helm for this purpose. The start module 285 and switches 287 may be physically packaged with other control modules, for example those used for throttle control. An example of a commercially available product that may be used as the start module 285 is Mercury Marine's Multi-Engine ERC Digital Throttle and Shift (DTS) controller. It should be recognized that the switches 287 do not allow the powered devices to operate unless and until authentication has been provided by the wireless anti-theft module 278. This is handled either by communication over CAN or asserting E-stop to prevent operation.

To perform the functions described above, the anti-theft module 278 necessarily consumes power anytime it is active and listening for a wireless key 283 to be presented. If the authentication information was only communicated over CAN, then the other powered devices would need to not be in a low power mode listening for the CAN signal indicating authentication of the wireless key 283 by the anti-theft module 278, further power is consumed on an ongoing basis. This includes marine drives, a start module 285, and/or various accessories. This fact, in conjunction with the ever-increasing number of devices that are listening over CAN (e.g., multiple marine drives), amounts to significant power consumption and thus limits the practical application of wireless keys for marine vessels.

In view of this, the present inventors have recognized a need for a new system for controlling wake and low power or sleep states of powered devices of a marine vessel, using wireless authentication, that nonetheless is simple, provides redundancy to prevent single-point failures, and requires only low power consumption.

Through experimentation and development, the present inventors have developed systems in which the powered devices 2 (e.g., marine drives 12, accessories) need not consume any power (or very low power) before authentication has successfully occurred. In other words, unlike systems known in the art, these powered devices 2 can remain off until an operator with appropriate credentials is present and wanting to use these powered devices. Additionally, the present inventors have advantageously developed a way in which existing components may be used, including the 1^{st} Mate Hub produced by Fell Marine for Mercury Marine (as discussed above) as the wireless anti-theft module 278 for communicating with the 1^{st} Mate Captain Fob as the wireless key. In particular, whereas the 1^{st} Mate Hub is conventionally used to communicate via CAN, the present inventors have recognized that one output pin 279 of the 1^{st} Mate Hub outputs a 12 VDC signal on a line 281 when a wireless key has been authenticated, which was used for collecting information about the system (e.g., whether the engines are running) and a Low Side Drive output to assert the Estop signal in case of a MOB event. The 1^{st} Mate Hub also includes several other High Side Outputs to provide the possibility of using these as a key switch replacement for a single engine. Therefore, rather than requiring powered devices to already be awake and waiting for CAN based signals to authenticate devices from a low power or sleep state, the systems and methods disclosed herein can be awoken as a function of this 12 VDC analog signal being outputted from the anti-theft module 278.

Additionally, the present inventors have developed mechanisms through which the powered devices may be awoken other than by an anti-theft module 278 outputting a 12 VDC signal, which is important to support other configurations of marine vessels and also to provide redundancy so that an operator is not stranded if such an anti-theft module 278, when present, is nonetheless not operational. As discussed below, this includes the separate mechanism of communicating via CAN bus in a new communication network, shown in FIG. 1 as the second communication network CN2. The present inventors have recognized that the powered devices cannot simply be configured to be "wake on CAN" devices within existing CAN bus systems, as there is constant traffic on these CAN buses. In other words, the powered devices would not remain in sleep mode when intended, due to the traffic from other devices. Accordingly, the present inventors have developed systems and methods that incorporates a new CAN bus dedicated for communicating signals relating to waking powered devices, which is otherwise quiet to allow these devices to remain sleeping when desired.

FIG. 4 shows one embodiment of a system 300 for waking a powered device 2 of a marine vessel 1 from a sleep state to a wake state according to the present disclosure, which may be incorporated as or within the system 10 of FIG. 1. The system 300 may also be referred to as a low energy system since it conserves power in controlling or managing the waking of the powered device 2 in contrast to systems and methods known in the art. The system 300 includes a communication network CN2 configured for communicating a signal for waking the powered device 2, whereby the communication is provided via both 12 VDC signals and CAN bus for redundancy. However, the present disclosure also contemplates configurations in which only one of analog signals and CAN signals are communicated over the communication network CN2. It should be recognized that additional communication may also be provided over another communication network in a conventional manner, which for brevity is not shown here as this is not suitable for waking the powered devices, as discussed above. In the example shown, the powered device 2 is a plurality of powered devices 2, and particularly port and starboard marine drives 12 configured to generate propulsion for the marine vessel. Other types and quantities of powered devices that are controllable to wake from a sleep state to a wake state are also completed (e.g., 1, 2, 3, 4, 5, 6, or more marine drives and/or other powered devices).

In the example shown, the system 300 includes an anti-theft module 278 configured to wirelessly communicate with a wireless key, to determine whether the wireless key meets predetermined criteria, and to generate the signal when the wireless key meets the predetermined criteria as discussed above. This signal may be a CAN signal, a 12 VDC signal, or both, which as discussed below causes the powered device to wake from the sleep state thereof. The system 300 also includes a controller 302 with buttons 304, which may be positioned at the helm and usable by the operator similarly to the start module 285 with buttons 287 discussed above (see FIG. 3) for selectively turning on/off, and starting/stopping the marine drives. The controller 302 may be configured to itself be in a sleep state until one of the switches 304 is pressed, an NFC or other wireless controller 306 is caused to close by proximity with a wireless key (similar to that of the anti-theft module 278), a wake button 308 is pressed, and/or a signal is received via CAN bus via communication line CL2 and/or 12 VDC within the second communication network CN2. In certain embodiments, the signal to wake the controller 302 (e.g., via CN2 on line CL2) may come from another authentication device (e.g., controller 310 or 312, discussed below) has been awoken itself. This other authentication device may have been awoken in a number of different manners, such as those listed above, including via a wake button associated therewith. The present disclosure contemplates configurations in which the system 300 does not include an anti-theft module 278 and/or controller 302.

The system 300 further includes controllers 310, 312 associated with each of the powered devices 2 to be controlled, here the two marine drives 14, 16 for which control of waking from sleep states is desired. The controllers 310, 312 are advantageously provided with conventional 6-pin ignition switch connectors 181 so as to be easily plugged into the system in place of a conventional key switch. Each of the controllers 310, 312 has a sleep state and a wake state, similar to the powered devices 2 to be controlled. The controllers 310, 312 are configured to receive the signal within the communication network, via CAN signal over the communication link CL2 and/or a 12 VDC analog signal as discussed above, which consequently causes the controller 310, 312 to wake from the sleep state thereof, and to then wake the powered device 2 from the sleep state thereof through the connector 181. The process of waking the powered device 2 via the connector 181 may be in a conventional manner and is thus not described further herein for brevity. It should be recognized that since the controllers 310, 312 each communicate within the second communication network CN2, the controllers 310, 312 are woken from their sleep states together, and thus also wake their corresponding powered devices 2 together.

In this manner, a single signal form the anti-theft module 278 indicating that an authorized operator is present and is requesting operation causes all connected powered devices 2 to be awoken from their respective sleep states. It should be noted that while the anti-theft module 278 (and/or the controller 302 if having an NFC 316 or other communication device) may thus consume some amount of power listening for this authorization, whereas the powered devices 2 and the controllers 310, 312 that wake them may remain in their sleep states until this authorization has been required, thereby conserving substantial power for the marine vessel over conventional methods. By way of examples, the controllers 310, 312 may consume less than 0.25 Watt when in their sleep modes.

In certain embodiments, such as shown for the controller 312, the controller 312 may also be woken from its sleep state via a switch or button 314. This allows the operator to manually wake the controller 312, which is executed without communicating through the communication network. Waking the controller 312 may then wake the corresponding powered device 2, or activate an NFC reader 316 and/or the like such that authentication subsequently wakes the powered device 2. The controller 312 may also be configured such that when awoken from the button 314, the controller 312 generates the signal within the communication network (via CAN and/or 12 VDC) to thereby wake the other controllers as well, which then wake their own corresponding powered devices. In certain embodiments, the other controllers that may be woken by the button 314 of the controller 312 may include (also or alternatively), other authentication devices such as the controller 302, similarly to if its own buttons 308 had been pressed. This may therefore render both controllers 312, 302 operable to receive an input, compare to a predetermined criteria, and output a signal if the input matches the predetermined criteria to thereby indicate authentication for the marine vessel. In this case, the controllers 312, 302 may also be referred to as being parallel authentication devices since each may be used independently provide authentication for operating the powered devices. This may be particularly useful if the authentication devices receive different types of inputs and the button 308,314 of one is more accessible than the other. Additionally, some authentication devices (e.g., legacy SmartCraft Connect devices) do not have user-accessible buttons, but can nonetheless be used to provide the benefits described herein by being woken via another button elsewhere (whether part of another authentication device, or elsewhere). In other embodiments, the signal is generated within the communication network only after authentication has been provided, which may be via the NFC reader 316 in the controller 310 or elsewhere in the system 300.

A similar button 277 may also be provided with the anti-theft module 278 to cause this device to wake from its own sleep state, and in certain embodiments any other authentication devices connected via CL2 (or in other embodiments CL1, not using a second CAN or at least not for this purpose). In certain embodiments, such a button press may be necessary before the anti-theft module 278 listens for wireless keys, thereby conserving additional power. In certain embodiments, pressing the button 277 does not itself cause a signal to be generated within the communication network, but rather is configured only to wake that anti-theft module 278, and likewise button 304 for controller 302, button 314 for module 312, etc. However, as stated above, these authentication devices (e.g., anti-theft modules 278) may alternatively be electronically coupled such that pressing a wake button anywhere within the system (whether associated with a particular anti-theft module 278 or not), wakes multiple or all authentication devices. In certain embodiments, this wake process lasts only for a predetermined time so as to limit the amount of power consumed. For example, pressing a wake button may cause one or more authentication devices to wake for 10 seconds, 20 seconds, 30 seconds, 1 minute, or other predetermined times, which may be configurable by the user. Further discussion of such embodiments is provided below.

It should be recognized that the button or buttons configured to wake an authentication device need not specifically be a dedicated "wake" button. For example, a keypad may be configured such that any button, including numeric buttons 0-9, cause a sleeping authentication device to wake (the same device associated with that keypad and/or others in the system). In certain embodiments, lights, sounds, and/or haptics may also be triggered by such button presses to indicate that the user may now authenticate.

In certain embodiments, the controllers 310, 312 may also include their own authentication mechanisms, such as including NFC readers 316 that may function similarly to those of the anti-theft module 278 and/or controller 302. The NFC readers 316 may be configured to not be powered unless the controller 310, 312 is also already awoken in one of the manners described above. In other examples, the NFC reader 316 may be operable while the controller 310, 312 is in its sleep state.

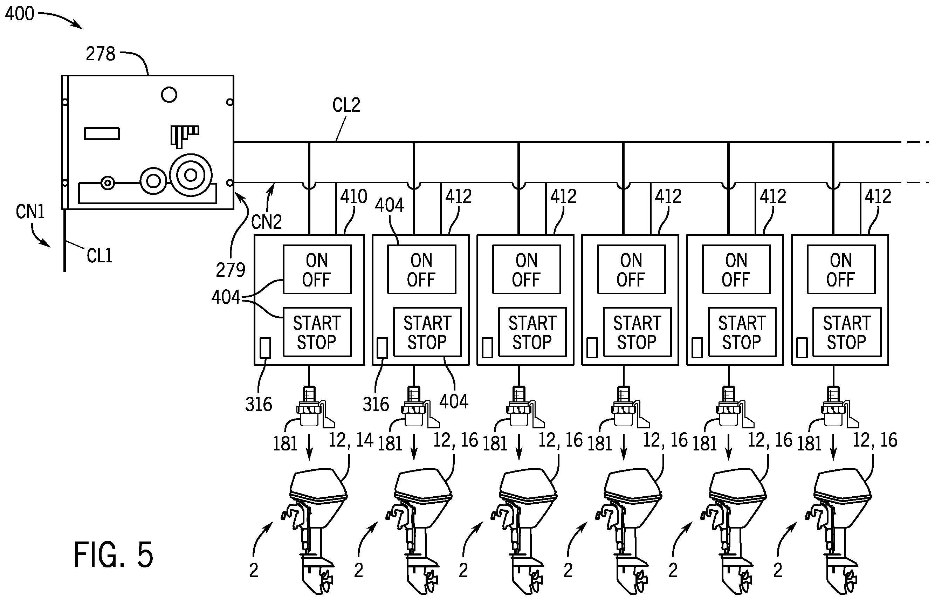

With reference to FIG. 5, the present inventors have recognized that the functionality of the different devices described above may be packaged differently, such as shown for the system 400. In this case, each of the new controllers 410, 412, which may otherwise be similar to the controllers 310, 312 discussed above, now incorporate buttons 404 for controlling the on/off and start/stop states of the powered devices. These buttons 404 may function similarly to the buttons 304 of the controller 302 from FIG. 4, essentially packaging the buttons and wake management for each marine drive into its own controller 410, 412. The controllers 410, 412 may be positioned at the helm 51 (FIG. 1), or other elsewhere in the marine vessel. The communication between different devices within the system 400 may otherwise be similar to that discussed above, with the controllers 410, 412 all being woken together (including one waking another) via signals generated within the second communication network CN2, which may be via CAN and/or analog signals.

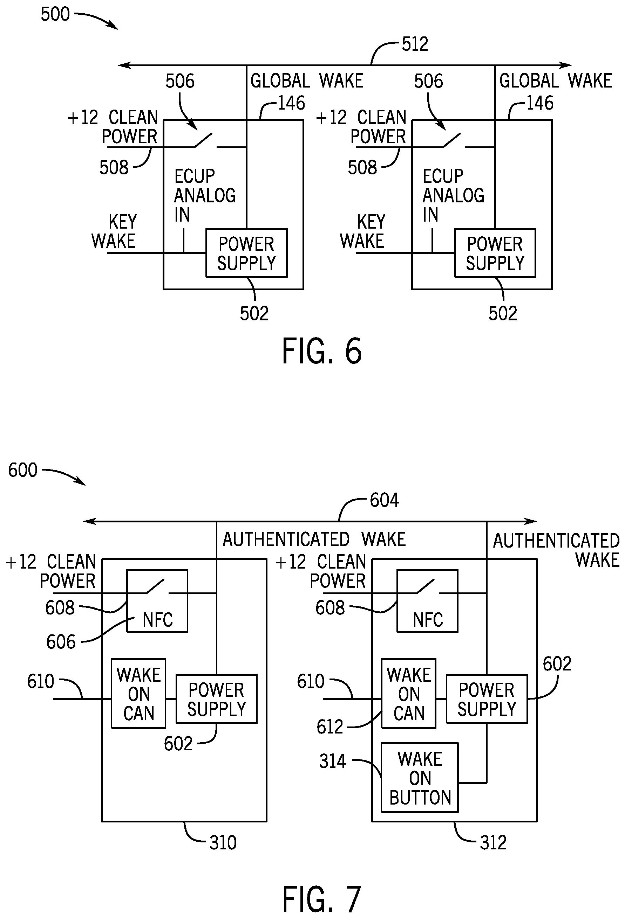

Additional discussion for how the controllers 310, 312 may be structures is provided in view of FIGS. 6 and 7. FIG. 6 generally depicts a system 500 configured with "global wake" as described above and in U.S. Patent No. 11,347,223. Each PCM 146 has a power supply 502 that requires power for activation, wherein this activation also causes the corresponding marine drive to wake from the sleep state to the wake state thereof. Each power supply 502 can be activated in 3 independent ways. First, the power supply 502 is powered up when an analog signal is received from a key input 504 (e.g., from turning a conventional key switch). Second, the power supply 502 may be powered up when a switch 506 closes to electrically connect the power supply 502 to a clean + 12 VDC supply 508. For example, the switch 506 may be a start-stop switch that is electrically coupled to a 12 VDC power source (e.g., when another device has authenticated such a startup, such as a key switch elsewhere).

When the power supply 502 of one PCM 146 is woken by either mechanism described above, it also causes the communication line 512 to also become powered (e.g., 12 VDC) through that PCM 146, here through connection 510. Since all of the PCMs 146 are connected within the communication network, this signal along the communication line 512 causes the power supplies 502 of other PCMs in the communication network to also power up, waking that device as well. In this manner, all powered devices are configured to power up together to enable communication as described in U.S. Patent No. 11,347,223. However, as discussed above, the system 500 of FIG. 6 has limitations, including the problems of not being suited for wireless key activation due to the energy consumption required.

The controllers 310, 312 for the system 600 of FIG. 7 have some similarity to the PCMs 146 of FIG. 6, most notably that when one power supply 602 associated therewith are powered up, it causes all other power supplies 602 to wake as well due to connection via the communication line 604. In the system 600, the switch 606 through which 12 VDC may be electrically coupled to the power supply 602 is shown as an NFC reader 608, which closes when the NFC reader 608 determines that a wireless key meeting the preset criteria has been detected. The power supply 602 may alternatively be powered up as a function of a CAN signal being received via a CAN bus 610 dedicated to this waking process, as described above. The wake on CAN circuit 612 may be configured in a conventional manner and is thus not described further herein.

In this manner, each of the controllers 310, 312 may be awoken in multiple different manners, whereby incoming signals can make all of the controllers at once, and whereby waking a single controller also causes wakening of the others in the same dedicated communication network.

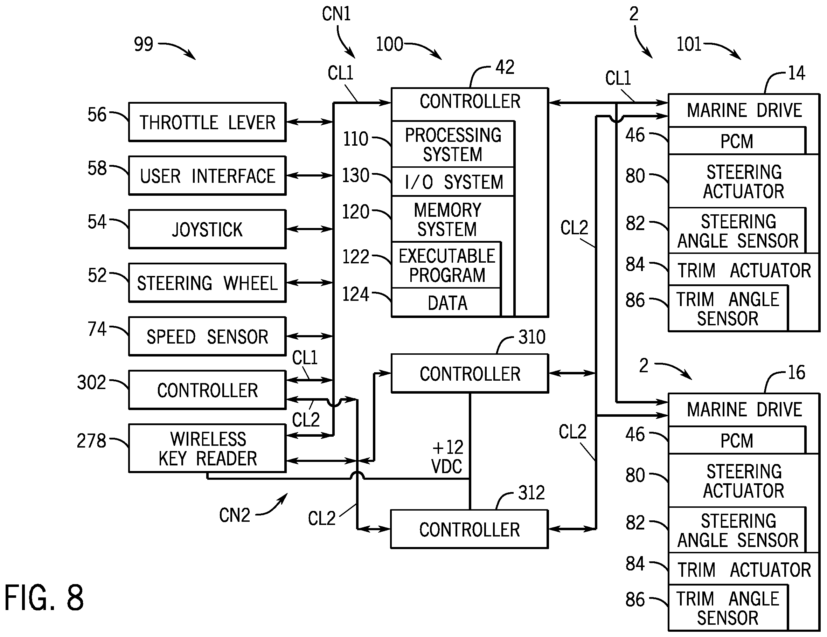

FIG. 8 provides additional information for how the control system 100 may be configured to perform the functions described above. For clarity, only two marine drives are shown in FIG 8; however, it should be recognized that the present disclosure contemplates having any number of powered devices (e.g., 1, 2, 3, 4, 5, 6, or more marine drives and/or powered devices). Certain examples of the present disclosure are described or depicted as functional and/or logical block components or processing steps, which may be performed by any number of hardware, software, and/or firmware components configured to perform the specified functions. For example, certain embodiments employ integrated circuit components, such as memory elements, digital signal processing elements, logic elements, look-up tables, or the like, configured to carry out a variety of functions under the control of one or more processors or other control devices. The connections between functional and logical block components are merely exemplary, which may be direct or indirect, and may follow alternate pathways.

In addition to the central controller 42 discussed above, which communicates via a first communication network CN1. The control system 100 further includes additional controllers 310, 312 configured to manage or control some of the powered devices 2 of the marine vessel, and particularly to wake these powered devices 2 from their sleep states that consume little to no power to wake states in which they may perform the various intended functions. These additional controllers 310, 312 communicate (e.g., to wake the powered devices) via signals through a second communication network CN2 with second communication links CL2. These signals may be in the form of CAN bus signals similar to those discussed above for the first communication network CN1, as a voltage (e.g., +12 VDC), or others.

Each controller (e.g., 42, 310, 312) may comprise a processor and a storage device, or memory, configured to store software and/or data utilized for controlling and or tracking operation of the system 10 and/or the electric propulsion system. The memory may include volatile and/or non-volatile systems and may include removable and/or non-removable media implemented in any method or technology for storage of information. The storage media may include non-transitory and/or transitory storage media, including random access memory, read only memory, or any other medium which can be used to store information and be accessed by an instruction execution system, for example. An input/output (I/O) system provides communication between the control system 100 and peripheral devices.

The different components within the control system 100 communicate within a first communication network CN1 and/or second communication network CN2. The second communication network CN2 is configured to have traffic relating to waking the various powered devices from sleep states, whereas other traffic is provided on the first communication network CN1 so as to not wake these powered devices unless intended. It should be recognized that the first communication network CN1 and/or the second communication network CN2 may be further subdivided into further communication networks while retaining the intended functionality. The control system 100 is capable of receiving information and/or controlling one or more operational characteristics of the and its various sub-systems by sending and receiving control signals via communication links CL1, CL2. In one example, the communication link CL1 within the first communication network CN1 and/or the second communication network CN2 include a controller area network (CAN) bus; however, other types of links could be used. It will be recognized that the extent of connections and the communication links CL1, CL2 may in fact be one or more shared connections, or links, among some or all of the components in the system 10. Moreover, the communication links CL1, CL2 lines are meant only to demonstrate that the various control elements are capable of communicating with one another, and do not represent actual wiring connections between the various elements, nor do they represent the only paths of communication between the elements. Additionally, the system 10 may incorporate various types of communication devices and systems, and thus the illustrated communication links CL1, CL2 may in fact represent various different types of wireless and/or wired data communication systems.

The controllers 42, 310, 312, and others within the control system 100 may each comprises a computing system that includes a processing system 110, memory system 120, and input/output (I/O) system 130 for communicating with other devices. Each computing system may have input devices and output devices, whereby the control system 100 may also generally be referred to as having input devices 99 and output devices 101 as shown in FIG. 8. In each case, the processing system 110 may be configured to load and executes an executable program 122 from the memory system 120, accesses data 124 stored within the memory system 120, and directs the system 10, and the marine vessel 1 generally to operate as described in further detail below.

The processing system 110 may be implemented as a single microprocessor or other circuitry or be distributed across multiple processing devices or sub-systems that cooperate to execute the executable program 122 from the memory system 120. Non-limiting examples of the processing system include general purpose central processing units, application specific processors, and logic devices.

The memory system 120 may comprise any storage media readable by the processing system 110 and capable of storing the executable program 122 and/or data 124. Voltage thresholds such as those described above for comparing to a present voltage in the power system may be stored in the data 124. The memory system 120 may be implemented as a single storage device or be distributed across multiple storage devices or sub-systems that cooperate to store computer readable instructions, data structures, program modules, or other data. The memory system 120 may include volatile and/or non-volatile systems and may include removable and/or non-removable media implemented in any method or technology for storage of information. The storage media may include non-transitory and/or transitory storage media, including random access memory, read only memory, magnetic discs, optical discs, flash memory, virtual memory, and non-virtual memory, magnetic storage devices, or any other medium which can be used to store information and be accessed by an instruction execution system, for example.

FIG. 8 also shows other components that may be controlled by the control system 100, such as a steering actuator 80 (e.g., operable based on the position of the steering wheel 52 or joystick 54) and an associated steering angle sensor 82 (e.g., Hall Effect sensors or potentiometers), and a trim actuator 84 (e.g., operable based on operation of trim switches at the helm 51) and an associated trim angle sensor 86 (e.g., Hall Effect sensors or rheostat sensors), each of which may be conventional and is thus not described further herein. Exemplary "drive-by-wire" systems with steering actuators and sensors are disclosed in U.S. Patent Nos. 7,150,664; 7,255,616; 7,467,595; 8,113,892. Exemplary trim actuators and sensors are disclosed in U.S. Patent Nos. 6,583,728; 7,156,709; 7,416,456; and 9,359,057; 10,137,971. The steering angles as measured by the steering angle sensors 82, as well as the trim angles as measured by the trim angle sensors 86, are received as inputs to the control system 100. In certain examples, the steering angle sensors 82 and the trim angle sensors 86 communicated through the PCMs 46 of the associated marine drives 12. However, other configurations and communication schemes are contemplated by the present disclosure (e.g., including engine control modules, a helm control module 53 as shown in FIG. 1, or others known in the art).

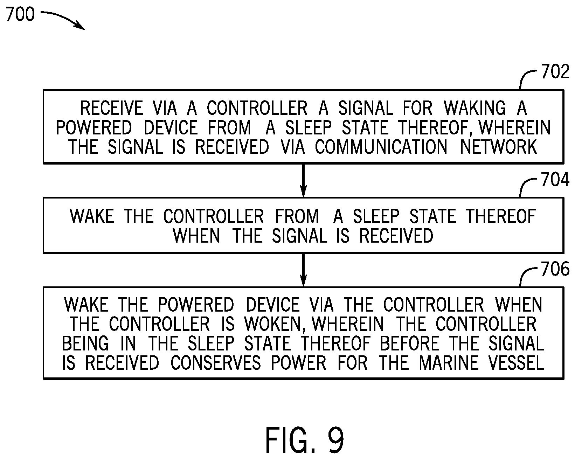

FIG. 9 depicts one method 700 for conserving power managing a powered device for a marine vessel according to the present disclosure. Step 702 provides for receiving via a controller a signal for waking the powered device from a sleep state thereof, wherein the signal is received via a communication network. As discussed above, this communication network is distinct from conventional communication networks on the marine vessel, which due to the level of signal traffic thereon would wake the powered device when unintended, thereby not conserving power. The signals within the communication network may be analog voltages, CAN bus signals, and/or other types of signals.

Step 704 provides for waking the controller from a sleep state thereof when the signal is received. The controller being in the sleep state thereof before the signal is received conserves power for the marine vessel. In other words, the controller does not consume power, or consumes very little power, when the powered device is not meant to be woken. This is in contrast to conventional systems and methods in which such a controller would constantly consume power simply waiting and monitoring for a signal requesting that the powered device be woken from its sleep state. Step 706 then allows for waking the powered device via the controller when the controller is woken. The waking of the powered device need not occur automatically after the authentication device is woken or successfully authenticated. For example, where a button for controlling ON/OFF (and/or START/STOP) for a marine drive is pressed to wake authentication devices, this may or may not also cause the marine drive to wake. In this manner, both the powered device and the controller that wakes it remain in sleep mode until a signal for waking the powered device is received, conserving substantial power over systems known in the art. In particular, whereas presently known modules consume power in the milliamp range, the systems and methods disclosed herein reduce this consumption to the microamp range or less, a power reduction of 10-100 times (or even more) that therefore enables the system configurations described above.

It should be recognized that the systems described herein still permit use of other conventional controls such as the anti-theft module 278 or the start module 285 of FIG. 3, which can still be used by the operator in a familiar manner (e.g., to start/stop the marine drives, etc.), albeit with a different control scheme underlying these devices. Likewise, the functionality of other devices like the 1^{st} Mate Captain FOB can still be functional by the controller 278 sending a E-STOP signal over CAN to disable the PCMs 46. In this manner, the systems described herein satisfy the unmet needs of a control system that is simple, redundant, and provides for no to very low power consumption despite offering control via wireless keys.

Through experimentation and development, the present inventors have recognized that not only is there a need for systems in which authentication devices use little or no power when not in use (e.g., consuming less than 0.25 watts), but also providing different mechanisms for waking these authentication devices for use. As discussed above, certain authentication device may include an onboard or associated button that may be pressed to wake the authentication device for use in receiving an input, comparing to a predetermined criteria, and if there is a match, outputting a signal to indicate successful authentication. By way of example, this was discussed above in relation to the button 314 for waking the controller 312 of FIG. 4. The present inventors have further recognized that such a wake button need not be part of the authentication device being woken thereby, but rather may be part of a separate device, which may or may not be part of a separate authentication device also configured for authenticating the user for operating a function of the marine vessel. For example, the waking function may be triggered by pressing any digit on a keypad, a trim button, or others, as discussed above.

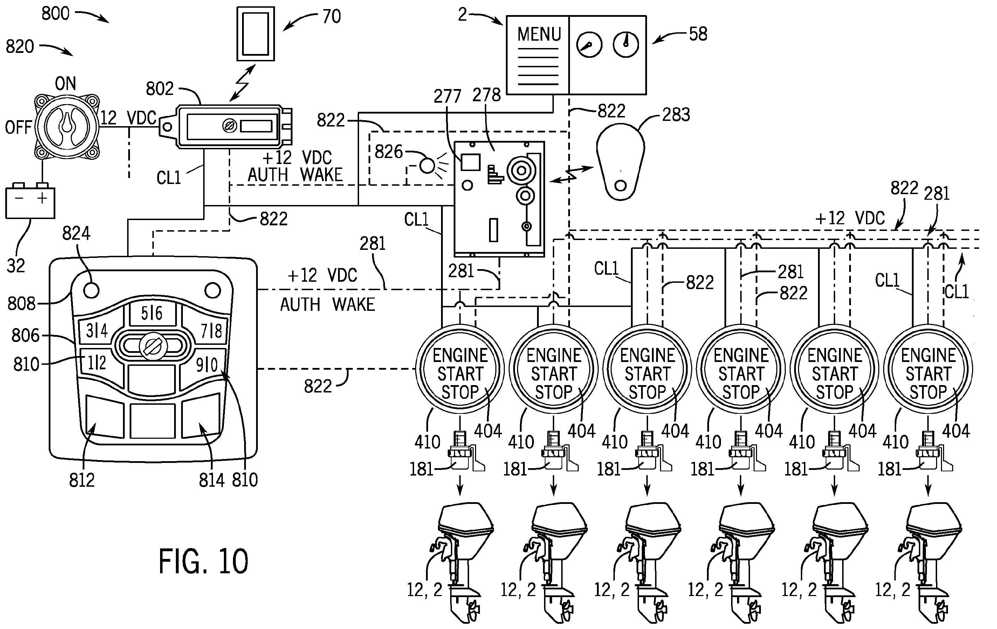

FIG. 10 depicts another system 800 for providing authentication for operation a marine vessel according to the present disclosure. Some of the elements shown in FIG. 10 may be similar or the same as those described above and thus are shown with the same reference numbers for brevity. In addition to the anti-theft module or authentication device 278 discussed above (e.g., 1st Mate Hub produced by Fell Marine Inc.), further authentication devices 802, 804 are also provided as independent mechanisms for authentication. By way of example, the authentication device 278 may be configured to be authenticated via use of a key fob 283 that communicates via NFC, Bluetooth ^{®}, Wi-Fi, other wireless protocols known in the art, and/or via other mechanism such as biometric scanners configured to scan fingerprints, retinas, faces, voices, and/or the like. The authentication devices 802, 804 may receive inputs via the same and/or another mechanism as those described above for the authentication device 278. By way of example, the authentication device 802 may be a Smartcraft Connect ^{™} device as discussed above.

The authentication device 804 is shown to include a digital keypad 806 having keys 810 that a user may press to provide the digital input thereto (e.g., a pass code such as 1-3-4-1-2). This may be in addition to permitting authentication via the other techniques described above.

The authentication device 804 also includes switches, here an unlock button 812 and a lock button 814. In the embodiment shown, the unlock button 812 and the lock button 814 are part of the authentication device 804, whereby the internal controllers of the authentication device 804 and the buttons 812, 814 are coupled to the marine vessel via a shared housing 808. Since the controllers within these authentication devices 278, 802, 804 may be the same or similar to those known in the art and/or described above (e.g., processing systems, I/O systems, memory systems similar to the controller 42 of FIG. 8), further detail is not provided herein for brevity.

Each of the authentication devices 278, 802, 804 has a sleep state and a wake state, whereby when in the sleep state the device consumes little to no power (e.g., less than 0.25 watts), and wherein the device is only operable to perform the authentication process when in the wake state. Similar to the button 314 discussed above (FIG. 4), pressing the unlock button 812 (and in certain embodiments, any other button on the authentication device 804) causes the authentication device 804 to wake from its sleep state to its wake state. This may occur by the authentication device 804 providing 12 VDC power to the authentication device, though other voltages and mechanisms are also contemplated (including sending a signal over CAN). Conversely, pressing the lock button 814 causes the authentication device 804 to be in its sleep state, as well as to engage the Theft Deterrence System (in other words, to withdraw any previous authentication from the system, such as by de-asserting a 12 VDC unlock signal and de-asserting authentication power).

If the authentication device 804 successfully authenticates the user (e.g., via the keys 810 or other mechanisms), the signal is outputted to indicate that operation of the marine vessel has been authenticated. This output may be provided in a manner known in the art, for example as a 12 VDC authenticated wake signal and/or CAN. In certain configurations, pressing any wake button only causes the authentication device 804 to wake for a predetermined time (e.g., 5, 10, 15, 20, 30 seconds) before discontinuing to provide power and/or a signal causing the authentication device to stay awake. In certain embodiments, after being woken from the sleep state to the wake state, the authentication device returns to the sleep state unless the key input is received and determined to match the predetermined criteria within a predetermined time after being woken. This ensures that the low power functionality of the system 800 is preserved even if the authentication device(s) are awoken and the marine vessel is not authenticated and used.

In certain embodiments, controllers associated with these authentication devices 278, 802, 804 perform the counting of the predetermined time until causing the devices to return to their respective sleep modes. In other embodiments, the switch (e.g., switch 404) has a controller that performs this counting task for the entire system 800 and outputs a signal to return the authentication devices 278, 802, 804 to their sleep states if none of them has outputting a signal indicating successful authentication before that predetermined time has lapsed.

It should be recognized that the switches or buttons that wake the authentication devices are not simply a battery switch 820 that cuts off all power to the marine vessel from a battery 32, for example. Moreover, the systems and methods described herein do not require any such battery switch 820. If a conventionally known and conventionally wired battery switch 820 (e.g., Blue Sea AMRB-7700) were used as the mechanism to transition authentication devices between sleep and wake states, this would not provide the functions and benefits described herein. For example, this would not provide the function of selectively waking the authentication devices without waking everything else, and in certain embodiments, only waking for the predetermined time before to allow authentication before returning to the sleep state. As such, the switch for waking authentication devices, which could physically be similar to a battery switch 820, but wired in the manner described herein rather than as known, is operably coupled such that at least one device of the marine vessel is configured to receive the power from the power source without the power passing through the switch. In other words, the switch for waking authentication devices is not the path through which all power flows to all powered devices and can be effectuated via power and/or over CAN as discussed above, for example.

It should be recognized that the systems disclosed herein therefore provide redundancy, as well as convenience and flexibility to easily control all (or multiple) powered devices together, or independently with separate buttons and/or the like. For example, the system may be configured such that all authentication may be provided via an anti-theft module communicating with an external device 70 such as a smartphone (in certain embodiments via execution of an app therewith), with the keys 810 of an authentication device such as a digital keypad 806 acting as a backup if authentication via the external device 70 is unavailable or fails, or if the user does not have a functioning external device at that time. Thus, in certain embodiments, a smartphone alone may be sufficient to authenticate, wake, and/or control all powered devices (or a subset thereof), with a digital keypad or another device being available as a backup.

This backup authentication device (e.g., having a keypad or other unlocking mechanism, wireless or not) may be the same or different as the device configured to communicate with the external device. However, for redundancy in the event of electronic failures, faulty wiring, and the like, the present inventors have recognized advantages in providing a separate device to provide the backup authentication functionality. In certain embodiments, the anti-theft module may be used not only for authentication, but may also be configured to be able to control operation of one, multiple, or all powered devices together (e.g., turning on and/or cranking all engines together, powering up all devices, shutting down all devices, etc.). Likewise, the digital keypad 806 may be used not only for authentication, but may also be configured to be able to control operation of one, multiple, or all powered devices together (e.g., having a key for "Start All", "Crank All", and/or "Stop All" for correspondingly operating all engines together). In this manner, the anti-theft module and/or digital keypad (or other authentication devices) may be used to control everything at once. In certain embodiments, which may be in addition to providing the ability to control multiple or all powered devices together (e.g., via the anti-theft module, a digital keypad, or other authentication devices), separate powered devices can be controlled individually via their own individual switches 404 (e.g., one or more buttons for "Start", "Crank", and/or "Stop") each corresponding to one of the powered device individually, which may be six switches for six engines or any other number of pairs. In this manner, the present disclosure contemplates providing multiple buttons for controlling multiple powered devices independently, such as multiple marine drives. It should be recognized that whether controlling a single or multiple powered devices, a separate button may not be required to select between "Start", "Crank", and/or "Stop". For example, a single button pressed once may start (or start all), pressed a second time may stop (or stop all), and held down (when beginning in the stop position) may correspond to crank (or crank all). Other control schemes are also contemplated.

With continued reference to FIG. 10, the present inventors have further identified that in certain configurations and use cases it is advantageous to provide that one or more authentication devices may be awoken via a button or switch that is separate therefrom (e.g., that does not share a housing 808 therewith). For example, one authentication device 804 may be awoken by pressing the button 277 associated with another authentication device 278, again by receiving 12 VDC power and/or a signal via CAN when this button 287 is pressed. In other cases, the switch may be completely separate from any authentication processes, such as the button 404 for controlling the on/off and start/stop states (e.g., cranking) of the powered devices. These buttons 404 are particularly configured to provide a high side output, as discussed above, which thereby serve as the authentication power signal for waking authentication devices.

In particular, the present inventors have recognized that while pressing the button 404 may not allow the powered device 2 associated therewith to operate unless authentication has been completed, this button 404 press may nonetheless be electrically coupled to the authentication devices 278, 802, 804 such that 12 VDC is provided thereto when pressed. The button 404 is then still operable to perform its conventional functions (e.g., cranking) once the system has authenticated. The button 404 may include a microcontroller (e.g., be configured similarly to the controller 42 of FIG. 8) to effectuate any timer feature that causes the system to return to sleep if authentication does not occur within a predetermined time, and also to "remember" when authentication has occurred, whereby these conventional operations can then be performed (e.g., waking and cranking a marine drive).

This eliminates the need to have dedicated wake buttons on the authentication devices, and/or not on all of them. In other words, the systems and methods disclosed herein provide the functionality of waking even authentication devices that do not have their own wake buttons and thus cannot assert authentication power themselves. Moreover, the present inventors have recognized that by waking all authentication devices simultaneously, which may use different mechanisms for authentication (e.g., key fob 283 versus wireless communication with an external device 70), the system 800 provides for authentication via whichever process or mechanism can accomplish the task most quickly. For example, the system 800 may authenticate the user by whichever method is fastest among the authentication device 278 detecting the presence of the proper key fob 283 and the authentication device 802 detects the presence of an authorized cellphone as the external device 70. This provides ease, flexibility, and responsiveness for the user.

For clarity, it should be recognized that the path for providing power and/or signal to wake authentication devices via the switch (e.g., via 12 VDC on lines 822; also referred to as "authentication power") is not the same as the path for which the authentication devices 278, 802, 804 transmit the output indicating authentication (e.g., via 12 VDC on lines 281 or CAN on CL1; also referred to as "authenticated wake"). It should further be recognized that the present disclosure contemplates other paths and other power and/or signals being communicated therewith.

Additional examples of timers are now provided. In certain example, if a user interaction is detected while the system is locked, the timers relate to how long to keep the authentication alive until the system will conclude that the user is no longer interacting therewith (e.g., 15-30 seconds). By way of example, this timer may correspond to someone walking up to a vessel and pressing a button to wake an authentication device, but then walks away with no further action taken by the user.

In another example, after the system receives authentication and unlocks, the timer relates to how long before the system re-locks if no further action is taken (e.g., the marine vessel is not subsequently used), for example 10 minutes. In certain embodiments, once the system is unlocked, all powered devices are unlocked and can assert authenticated power. Therefore, the timer can provide that if a user authenticates and then ends up departing, the marine vessel does not remain unsecure for too long.

Another example relates to how long to keep the authentication alive when the marine vessel has been used. For example, this timer may correspond to after the system is authenticated and the user operates the marine vessel, subsequently turning off the marine drives. In certain examples, the authentication will remain active for 15 minutes, 1 hour, 3 hours, 12 hours, or other durations before requiring re-authorization. This too may be selectable by the user, for example depending on the remoteness of the waters in which the marine vessel is operated, whether the marine vessel is a rental, etc.

The present inventors have identified further opportunities and advantages using the systems and methods disclosed herein. In particular, the present inventors have recognized that it would be advantageous to permit some powered devices, and especially those with longer startup times, to begin the startup progress before the system has complete authentication. For example, certain display devices 58, wireless Bluetooth ^{®}, Wi-Fi, NFC, LTE enabled authentication devices, and other devices require a relatively long time to boot (e.g., 5, 10, 20, 30, or 60 seconds). It is beneficial to have these display devices 58 in an off state to save power. However, the present inventors have recognized that it the display devices 58 and/or other select powered devices 2 are also provided power along with that provided to the authentication devices (e.g., after pressing a switch 404, as 12 VDC along the lines 822), this can start the boot process while the user performs the authentication. This way, once the user has provided the input and the authentication device has outputted the signal indicating successful authentication, these slower devices are already, or near ready for use. If alternatively authentication does not result within a predetermined time after the authentication power is provided, the slower devices may be returned to their sleep states along with the authentication devices. This Authentication Power signal and/or the Authentication signals by used to enable, start, or operate other onboard devices such as interior or underwater lighting, battery switches, or bilge blowers.

In certain embodiments, the powered device 2 that will be allowed to boot before authentication is completed may be limited to those deemed "uncritical" from a theft perspective. For example, use of display devices, lights, and other devices that would not enable one to steal the marine vessel may be allowed to startup before authentication has completed, sleeping again if this is unsuccessful. This also provides the further option of using the display device itself in the authentication device, such as to enter a key code similar to the keypad 806. It may also permit lights and/or other features that assist the user in the authentication process to be operated before authentication is complete, such as to shine on the keypad 806 or illuminate authentication devices for using proximity based key fobs 283. For example, the system 800 of FIG. 10 depicts LEDs 824, 826 that are illuminated while the authentication devices 278, 802, 804 are awake, which may change color when the authentication has completed so as to quickly indicate the same to the user.

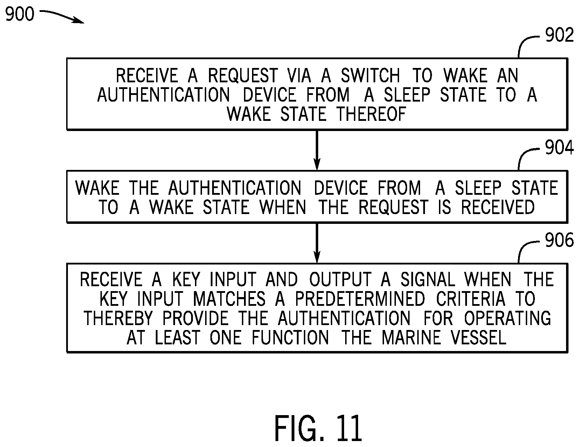

FIG. 11 depicts one method 900 for providing authentication for operating a marine vessel having a power source, for example operating the systems described above. Step 902 provides for receiving a request via a switch to wake an authentication device from a sleep state to a wake state thereof. The switch may be operably coupled such that at least one device of the marine vessel is configured to receive power from the power source without the power passing through the switch. In other words, the switch is not simply a mechanical power cutoff for electrically isolating the power system (e.g., a battery switch for a battery). Step 904 provides for waking the authentication device from a sleep state to a wake state when the request from step 902 is received. Once awake, step 906 provides for the authentication device receiving a key input (which may be received wirelessly) and to output a second signal when the key input matches a predetermined criteria to thereby provide the authentication for operating at least one function the marine vessel. The authentication device consumes less of the power in the sleep state than in the wake state and is inoperable to output the second signal when in the sleep state. As such, the authentication device being in the sleep state before being the request to wake is received conserves the power from the power source.

The functional block diagrams, operational sequences, and flow diagrams provided in the Figures are representative of exemplary architectures, environments, and methodologies for performing novel aspects of the disclosure. While, for purposes of simplicity of explanation, the methodologies included herein may be in the form of a functional diagram, operational sequence, or flow diagram, and may be described as a series of acts, it is to be understood and appreciated that the methodologies are not limited by the order of acts, as some acts may, in accordance therewith, occur in a different order and/or concurrently with other acts from that shown and described herein. For example, those skilled in the art will understand and appreciate that a methodology can alternatively be represented as a series of interrelated states or events, such as in a state diagram. Moreover, not all acts illustrated in a methodology may be required for a novel implementation.

This written description uses examples to disclose the invention, including the best mode, and also to enable any person skilled in the art to make and use the invention. Certain terms have been used for brevity, clarity, and understanding. No unnecessary limitations are to be inferred therefrom beyond the requirement of the prior art because such terms are used for descriptive purposes only and are intended to be broadly construed. The patentable scope of the invention is defined by the claims and may include other examples that occur to those skilled in the art. Such other examples are intended to be within the scope of the claims if they have features or structural elements that do not differ from the literal language of the claims, or if they include equivalent features or structural elements with insubstantial differences from the literal languages of the claims.

## Claims

1. A system for providing authentication for operating a marine vessel having a power source, the system comprising:
an authentication device configured to receive a key input and to output a signal when the key input matches a predetermined criteria to thereby provide the authentication for operating at least one function of the marine vessel, wherein the authentication device has a sleep state and a wake state, wherein the authentication device consumes less power in the sleep state than in the wake state and is inoperable to output the signal when in the sleep state; and
a switch operably coupled to the authentication device and operable to wake the authentication device from the sleep state to the wake state thereof, wherein the switch is operably coupled such that at least one device of the marine vessel is configured to receive the power from the power source without the power passing through the switch;
wherein the authentication device being in the sleep state before being woken by the switch conserves the power from the power source.

2. The system according to claim 1, further comprising a controller operatively coupled with the switch and configured such that the switch ceases waking the authentication device after a predetermined time since being woken.

3. The system according to claim 1 or 2, wherein after being woken from the sleep state to the wake state the authentication device returns to the sleep state unless the key input is received and determined to match the predetermined criteria within a predetermined time after being woken.

4. The system according to claim 1, 2 or 3, wherein the switch is operable to wake the authentication device by selectively providing 12 VDC thereto and/or wherein the authentication device consumes less than 0.25 Watts of power when in the sleep state.

5. The system according to any one of the preceding claims, wherein the switch and the authentication device are coupled to the marine vessel via a shared housing.

6. The system according to any one of the preceding claims, wherein the marine vessel comprises a marine drive, and wherein the switch is further operably coupled to control at least one of powering and cranking the marine drive when the authentication device has provided the authentication for operating the marine vessel.

7. The system according to any one of the preceding claims, wherein the authentication device is a first authentication device, the key input is a first key input, the predetermined criteria is a first predetermined criteria, and the signal is a first signal, further comprising a second authentication device configured to receive a second key input and to output a second signal when the second key input matches a second predetermined criteria to thereby provide the authentication for operating the marine vessel, wherein the second authentication device has a sleep state and a wake state, wherein the second authentication device consumes less power from the power source when in the sleep state than when in the wake state and is inoperable to output the second signal when in the sleep state, and wherein the first authentication device and the second authentication device are operatively coupled such that waking the first authentication device causes the second authentication device to wake.

8. The system according to any one of the preceding claims, wherein the authentication device is configured to receive the key input wirelessly.

9. The system according to any one of the preceding claims, wherein the marine vessel comprises a powered device configured to receive the power from the power source, and wherein the powered device is prevented from receiving the power from the power source until the authentication device has provided the authentication for operating the marine vessel.

10. The system according to any one of the preceding claims, wherein the marine vessel comprises a first powered device and a second powered device each configured to receive the power from the power source, and wherein the first powered device is prevented from receiving the power from the power source until the authentication device has been woken and the second powered device is prevented from receiving the power from the power source until the authentication device has provided the authentication for operating the marine vessel.

11. The system according to any one of the preceding claims, wherein the marine vessel comprises a powered device configured to be powered by the power source, wherein the switch is inoperable to stop the powered device from operating after operation of the marine vessel has been authenticated.

12. The system according to any one of the preceding claims, wherein the marine vessel comprises a powered device configured to be powered by the power source and operable only after the authentication device has outputted the signal indicating authentication, wherein the powered device has a sleep state and a wake state and uses less power in the sleep state than in the wake state, and wherein the authentication device outputting the signal causes the powered device to wake from the sleep state to the wake state.

13. A method of providing authentication for operating a marine vessel having a power source, the method comprising:
receiving a request via a switch to wake an authentication device from a sleep state to a wake state thereof, wherein the switch is operably coupled such that at least one device of the marine vessel is configured to receive power from the power source without the power passing through the switch; and
waking the authentication device from a sleep state to a wake state when the request is received, wherein the authentication device is configured to receive a key input and to output a second signal when the key input matches a predetermined criteria to thereby provide the authentication for operating at least one function of the marine vessel, wherein the authentication device consumes less of the power in the sleep state than in the wake state and is inoperable to output the second signal when in the sleep state;
wherein the authentication device being in the sleep state before the request to wake is received conserves the power from the power source.

14. The method according to claim 13, wherein the request is provided for a predetermined time after actuating the switch and subsequently ended, and wherein the authentication device is caused to return to the sleep state after the predetermined time unless the key input is received and determined to match the predetermined criteria before the predetermined time has lapsed.

15. The method according to claim 13 or 14, wherein the switch is a first switch, the method further comprising:
operating a first function of a first powered device and a second function of a second powered device simultaneously when receiving a request from a second switch as the at least one function of the marine vessel having authentication;
operating the first function of the first powered device without operating the second function of the second powered device when receiving a request from a third switch as the at least one function of the marine vessel having authentication; and
operating the second function of the second powered device without operating the first function of the first powered device when receiving a request from a fourth switch as the at least one function of the marine vessel having authentication.
